Europäisches Patentamt

European Patent Office

Office européen des brevets

(11) Publication number: **0 263 626**
**A2**

(12) **EUROPEAN PATENT APPLICATION**

(21) Application number: **87308540.1**

(22) Date of filing: **28.09.87**

(51) Int. Cl.4 **G01D 5/20**

(30) Priority: **04.10.86 GB 8623886**

(43) Date of publication of application:
**13.04.88 Bulletin 88/15**

(84) Designated Contracting States:
**BE CH DE FR IT LI NL SE**

(71) Applicant: **SCHLUMBERGER ELECTRONICS (U.K.) LIMITED**
**124 Victoria Road**
**Farnborough Hampshire GU14 7PW(GB)**

(72) Inventor: **Chapman, David John**
**3 Moorhen Way**
**Bognor Regis Sussex, P022 9DA(GB)**

(74) Representative: **Stoole, Brian David et al**
**Schlumberger Electronics (U.K.) Limited 124 Victoria Road**
**Farnborough Hampshire GU14 7PW(GB)**

(54) Displacement transducers.

(57) A linear inductive displacement transducer comprises a cylindrical housing 12 containing cylindrical windings 18 within which a magnetic armature 24 is coaxially movable to vary the inductance of the windings. The armature 24 is connected to a shaft 34, which extends coaxially through an open end 26 of the housing 12 and is rotatably and slidingly supported in a plain plastics bearing 42 which is an interference fit in the open end of the housing.

EP 0 263 626 A2

# DISPLACEMENT TRANSDUCERS

This invention relates to displacement transducers, and is more particularly concerned with linear inductive displacement transducers.

One known form of linear displacement transducer, based upon a linear variable differential transformer (or LVDT), comprises a number of axially spaced coils forming a differential transformer, and an armature movable axially within the coils to vary their mutual inductance. The armature is connected to a shaft which is coaxial with the armature, and which is supported in a linear roller bearing.

Such a transducer provides excellent accuracy, linearity and repeatability, but can be expensive to manufacture. Probably the most expensive item in the transducer is the linear roller bearing, which comprises a sleeve whose opposite ends each contain two axially spaced sets of circumferentially distributed steel ball bearings, typically less than 1mm in diameter.

It is an object of the present invention to provide a linear inductive displacement transducer which is significantly less expensive to manufacture than the abovementioned known form of transducer.

According to the present invention, there is provided a linear inductive displacement transducer comprising:
a cylindrical housing open at at least one end;
at least one coil disposed coaxially within the housing; and
a shaft coaxial with the housing, the shaft having one end connected to an armature coaxial with the coil, and its other end projecting out of the open end of the housing, the shaft and armature on the one hand, and the housing on the other hand, being axially movable with respect to each other in dependence upon the displacement to be sensed; wherein the shaft is rotatably supported in the housing by a single cylindrical plain bearing coaxial with the housing, the bearing being made from a suitable plastics material and mounted in said one end of the housing.

In a preferred embodiment of the invention, the bearing is a press fit in the open end of the housing, and has a plurality of axially spaced circumferentially extending barb-like projections on its external surface, said projections being shaped to facilitate insertion of the bearing into the open end of the housing and to inhibit extraction therefrom.

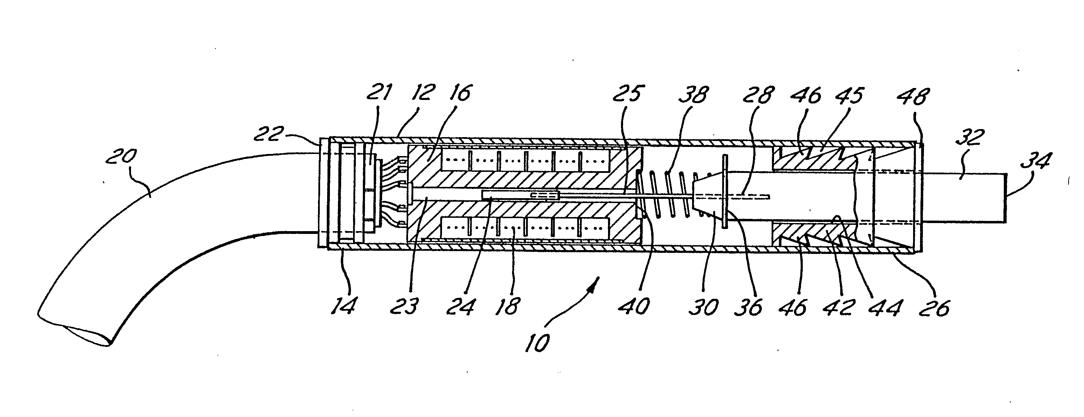

The invention will now be described, by way of example only, with reference to the accompanying drawing, which is a sectional view of a linear inductive displacement transducer in accordance with the present invention.

The transducer shown in the drawing is indicated generally at 10, and comprises a cylindrical housing 12 open at both ends and made of unheat-treated EN56A/M steel. Positioned within the housing 12, adjacent one end 14 thereof, is a plastics bobbin 16 which is coaxial with the housing, and on which are wound the various windings 18 of a differential transformer. Electrical connections to the windings 18 are made via the individual wires of a multi-wire cable 20, which enters the open end 14 of the housing 12 and is held firmly therein by the combination of a crimp ring 21 and an annular plastics end cap 22. The end cap 22 is a tight fit around the cable 20 and a press fit within the end 14 of the housing 12, and thus closes the end 14 of the housing, while the crimp ring 21 is crimped round the end of the cable 20 within the housing 12, so preventing the end of the cable from being withdrawn through the end cap 22.

The bobbin 16 has a central bore 23 extending coaxially therethrough, to receive a cylindrical armature 24 of a magnetic material. The armature 24 is coaxially fitted to one end of a steel carrier rod 25, which projects out of the bobbin 16 towards the other end 26 of the housing 12 and which is bonded using a suitable adhesive, such as Loctite, into a bore 28 extending coaxially into one end 30 of a hardened steel shaft 32 coaxial with the housing 12.

The shaft 32 extends out of the other end 26 of the housing 12, and the other end 34 of the shaft (ie the end outside the housing) is ground flat. The end 30 of the shaft 32 inside the housing is tapered, and provided with a groove in which is fitted a circlip 36. The tapered end 30 serves to centre one end of a coil spring 38, whose other end is received in a circular recess 40 formed in the adjacent end face of the bobbin 16, coaxially therewith.

The shaft 32 is rotatably supported in the end 26 of the housing 12 in a cylindrical plain bearing 42 coaxial with the housing. The bearing 42 is machined from a suitable plastics material, for example Delrin, and comprises a central bore 44 which provides a very close sliding fit around the shaft 32. The axial extent of the bearing 42 is calculated to be about three times the diameter of the shaft 32: this results in an axial extent equal to about 50% of the length of the shaft 32, which thus provides support for the shaft over a substantial part of its length, and so reduces side play.

The external surface of the bearing 42 is provided with a plurality of axially spaced circumferentially extending recesses 45 which serve to define barb-like projections 46, ie circumferentially extending projections which are barb-like in cross-section and inclined towards the open end of the housing 12. The diameter of the bearing 42 at the tips of the barb-like projections 46 is very slightly greater than the internal diameter of the housing 12, so that the bearing is a tight press fit in the open end 26 of the housing. The direction of inclination of the barb-like projections 46 facilitates insertion of the bearing 42 into the housing 12, but inhibits withdrawal. To further enhance the engagement between the external surface of the bearing 42 and the housing 12, the internal surface of the open end of the housing can be provided with a fine thread which engages the barb-like projections 46. The right hand end of the bearing 42, as viewed in the drawing, has a radially outwardly directed flange 48, which abuts the right hand end of the housing 12 when the bearing is pressed fully thereinto, so that the bearing effectively closes the end 26 of the housing.

To assemble the transducer 10, the assembly of the armature 24, the carrier rod 25, the shaft 32, the circlip 36 and the spring 38 are inserted into the housing 12 (into which the differential transformer based on the bobbin 16 and windings 18 has already been secured), until it is in the position shown in the drawing, and then the bearing 44 is simply slid over the shaft 32 from the end 34 thereof and pressed into the open end 26 of the housing 12.

Once assembled, the transducer 10 is used by causing an object whose displacement is to be sensed to contact the ground flat end 34 of the shaft 32, so as to apply a force perpendicular thereto. Relative movement between the object and the transducer 10 thus moves the shaft 32 along its axis, so moving the armature 24 within the windings 16 and thereby varying their mutual inductance. Conventional circuitry (not shown) applies A.C. signals to, and receives A.C. signals from, the windings 16 via the cable 20, in order to sense the changes in the mutual inductance of the windings 16 and to produce an output signal representative of the change in displacement.

It will be appreciated that the transducer 10 is thus relatively simple and inexpensive to make. In particular, the bearing 44 is relatively inexpensive, both to make, and to install in the housing 12. In addition, since the bearing 44 closes the housing 12 and fits very closely round the shaft 32, no gaiter or like sealing means is required. Finally, the grinding flat of the end 34 of the shaft 32 tends to minimise the application of side forces to the shaft, by ensuring that users are effectively obliged to apply axial forces only.

Several modifications can be made to the transducer 10. Thus suitable plastics other than Delrin can be used for the bearing 44, e.g. P.T.F.E. or nylon, and the bearing can be moulded rather than machined. Additionally, the windings 18 can be arranged in a half inductive bridge arrangement, rather than as a differential transformer.

## Claims

1. A linear inductive displacement transducer, comprising:
a cylindrical housing open at at least one end;
at least one coil disposed coaxially within the housing; and
a shaft coaxial with the housing, the shaft having one end connected to an armature coaxial with the coil, and its other end projecting out of the open end of the housing, the shaft and armature on the one hand, and the housing on the other hand, being axially movable with respect to each other in dependence upon the displacement to be sensed; wherein the shaft is rotatably supported in the housing by a single cylindrical plain bearing coaxial with the housing, the bearing being made from a suitable plastics material and mounted in said one end of the housing.

2. A transducer as claimed in claim 1, wherein the bearing is a press fit in the open end of the housing.

3. A transducer as claimed in claim 2, wherein the bearing has a plurality of axially spaced circumferentially extending barb-like projections on its external surface, said projections being shaped to facilitate insertion if the bearing into the open end of the housing and to inhibit extraction therefrom.

4. A transducer as claimed in claim 3, wherein the internal surface of said open end is threaded to facilitate engagement with the barb-like projections on the external surface of the bearing.

5. A transducer as claimed in any preceding claim, wherein the axial length of said bearing is not less than $2\frac{1}{2}$ times the outside diameter of said shaft.

6. A transducer as claimed in any preceding claim, wherein the bearing is made from Delrin.

7. A transducer as claimed in any preceding claim, wherein the other end of the shaft is tapered, and serves to locate a coil spring disposed between the shaft and the coil so as to urge them apart.

8. A transducer as claimed in claim 6, wherein said other end of the shaft is provided with a circlip mounted in a groove, to prevent said one end of the shaft from passing through the bearing.

9. A linear inductive displacement transducer substantially as herein described with reference to the accompanying drawing.